# EUROPEAN PATENT APPLICATION

(11) **EP 3 708 880 A1**
(43) Date of publication of application: **16.09.2020**
(21) Application number: 19464004.1
(22) Date of filing: 12.03.2019
(51) Int. Cl.: F16J 15/02, F25D 23/02

(54) **SEAL FOR A SLIDING ELEMENT**

(71) Applicant: SAINT-GOBAIN GLASS FRANCE, 92400 Courbevoie (FR)
(72) Inventor: TUDORACHE, Nicolae, 135200 Gaesti, Jud Dambovita (RO)
(74) Representative: Fierascu, Cosmina-Catrinel

(57) **Abstract**

Seal (1) for a sliding element (2), comprising:
- a first chamber (C1) and a second chamber (C2), arranged inside the seal (1) and separated by a common wall (3), wherein the first chamber (C1) and the second chamber (C2) have a common symmetry axis (X) perpendicular to the length of the seal (1);
- latching elements (4)
- sealing elements (7)
- two parallel folding grooves (8) capable to ensure the deformation of the second chamber (C2) when applying an external pressure to the sealing elements (7);
- the common wall (3) has a substantially U-shape when seen in cross-section in a plane perpendicular to the length of the seal (1), such that in the region of the common wall (3), the contour of the first chamber (C1) has a convex shape and the contour of the second chamber (C2) has a concave shape.

## Description

The invention relates to a seal for a sliding element, in particular for a sliding cover or for a sliding shelf of refrigerating device.

Prior art document EP1651914 discloses a seal embodiment (see Figure 1) for a sliding cover of refrigerating device. The seal 1 comprises a first chamber C1 bonded to a second chamber C2, the two chambers being separated by a common wall 3. The first chamber C1 is provided with latching elements 4 configured to be latched in an associated groove provided in the frame of the sliding cover, and the second chamber C2 is elastic/deformable and provided with strips 7 bonded along its outer surface. The second chamber C2 is further provided with hinges 8 that allow the deformation of the second chamber as a result of the contact pressure generated by the sliding cover, wherein the seal may be manufactured of various plastic materials having preferred physico-chemical properties. The seal 1 has a vertical symmetry axis X. The seal provides a good sliding, the necessary force for moving the sliding cover being small, such that a user perceives the opening/closing of the sliding cover as an easy operation.

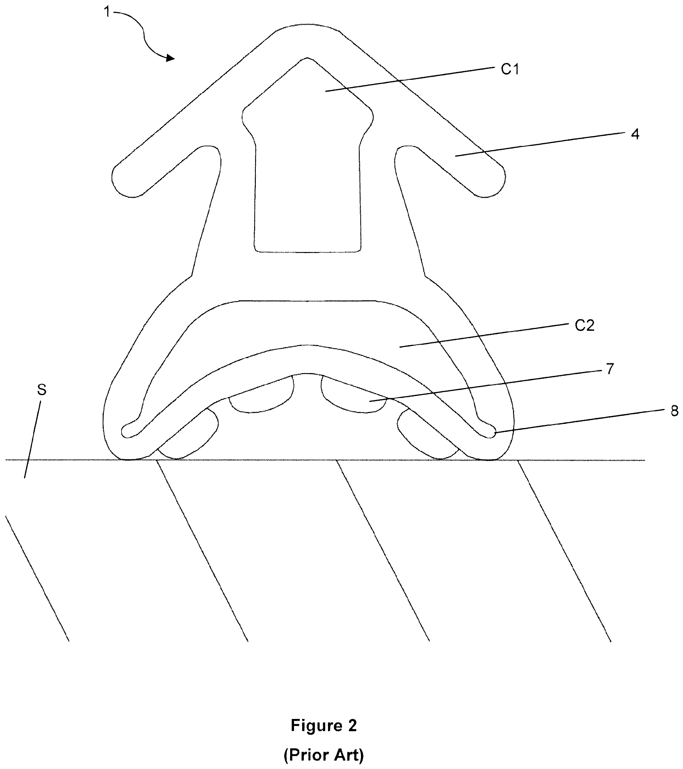

It is known that a good sealing is ensured only while the strips on the second chamber are in contact with the rails on which the cover is sliding.
The disadvantage of the seal disclosed in EP16519140 is that in time, due to wear, the material of the seal loses its properties and the way the seal is deformed will be different in respect to the designed one. Such an undesired deformation is shown in Figure 2, where the deformation of the second chamber is such that the strips are no longer in contact with the sliding rails, thus leading to a deficient sealing.
Because of the interspaces that are formed due to the defective deformation of the seal, an air exchange takes place between the surrounding environment and the refrigerated space, process during which warmer outer air enters the refrigerated space, thus occurring energy dissipation effects, and consequently reducing the efficiency of the refrigerating device.

The present invention has the purpose to provide a seal similar to the one disclosed in EP1651914, to keep all the advantages thereof, but to eliminate all above mentioned disadvantages.

The seal for a sliding element, according to the invention, comprises:
- a first chamber, arranged inside the seal and extending along the whole length of the seal;
- a second chamber, arranged inside the seal and extending along the whole length of the seal;
   - the first chamber and the second chamber being separated by a common wall;
   - the first chamber and the second chamber having a common simmetry axis perpendicular to the length of the seal;
- latching elements provided on the outer surface of the first chamber, and configured to be latched in an associated groove provided in a frame of the sliding element;
- sealing elements provided on the outer surface of the seal on the second chamber, opposed to the latching elements;
- two parallel folding grooves, arranged along the second chamber and symmetrically in respect to the common symmetry axis, said folding grooves being capable to ensure the deformation of the second chamber when applying an external pressure to the sealing elements;
- the common wall has a substantially U-shape when seen in cross-section in a plane perpendicular to the length of the seal, such that:
   - the common wall extends inside the second chamber;
   - when seen in said cross-section, in the region of the common wall, the contour of the first chamber has a convex shape and the contour of the second chamber has a concave shape;
   - when at least one of the sealing elements is in contact with and pressed to a sliding rail, the second chamber is capable to adopt a deformed position in which the common wall is in contact, over its entire length, with the inner surface of the second chamber, thus dividing the second chamber into two separate rooms, isolated from one another.

By sliding element is meant, for example, a sliding cover or a sliding shelf.

The invention will be better understood from the following embodiment, explained in detail and based on the drawings, that show:
Figure 1 : a seal according to the closest prior art;
Figure 2 : the seal of figure 1, disadvantageously deformed due to wear;
Figure 3 : seal according to the invention (not deformed);
Figure 4 : seal according to the invention, mounted in a sliding element and in contact with a sliding rail arranged in a plane parallel to the plane of the sliding element;
Figure 5 : seal according to the invention, mounted in a sliding element and in contact with a sliding rail arranged in a plane non-parallel to the plane of the sliding element;

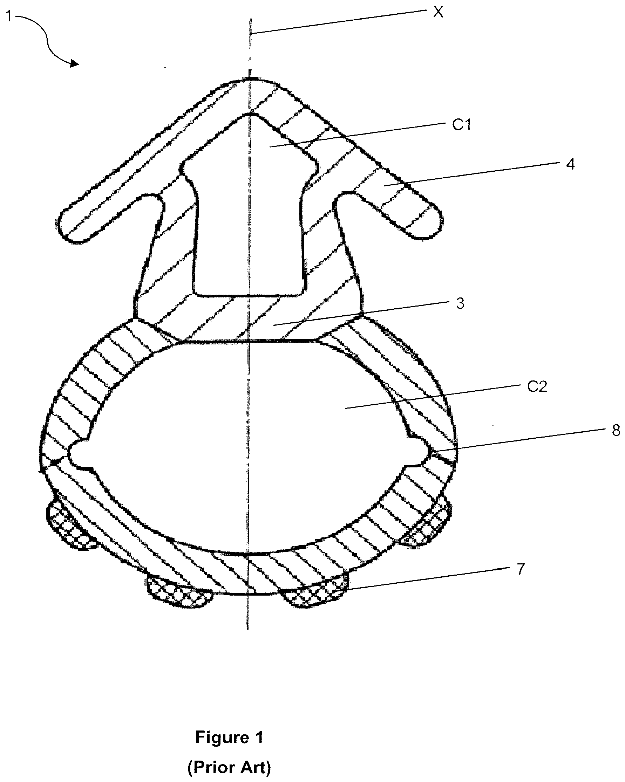

Figure 1 shows a prior art seal 1, more precisely from document EP1651914, comprising a first chamber C1 bonded to a second chamber C2. The first chamber C1 is provided with latching elements 4 configured to be latched in an associated groove provided in the frame of a sliding cover (not shown in the figure), and the second chamber C2 is elastic/deformable and provided with strips 7 bonded along its outer surface. The second chamber C2 is further provided with folding lines 8, having the function of a hinge, that allow the deformation of the second chamber C2 as a result of the contact pressure generated by the sliding cover. The seal 1 may be manufactured of various plastic materials having preferred physico-chemical properties. The first chamber C1 and the second chamber C2 have a common wall region 3 and a common symmetry axis X.

Figure 2 shows the seal of figure 1, disadvantageously deformed due to wear. More precisely, the second chamber C2 is deformed such that the contact between the seal 1 and the sliding surface S is no longer accomplished on two or more of the strips 7 (situation in which the sealing is a proper one) but exclusively on the folding lines 8 zones. In other words, the inappropriate deformation of the second chamber C2 consists in the convex shape on which the strips 7 are arranged.

As a matter of fact, if said seal is used to seal a container, the wear of the seal will lead to a defective sealing and implicitly to a defective thermal insulation of the inside of the container in respect to the outer atmosphere.

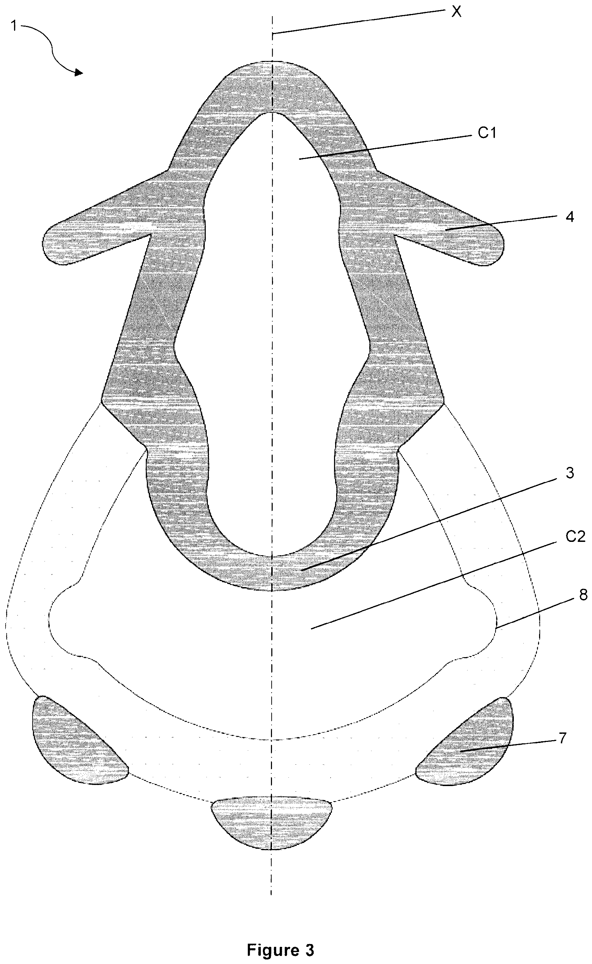

Figure 3 (a cross section view in a plane perpendicular to the seal's length) shows a seal according to the invention, comprising:
- a first chamber C1, arranged inside the seal 1 and extending along the whole length of the seal 1 (in other words, the length of the first chamber C1 coincides with the length of the seal 1);
- a second chamber C2, arranged inside the seal 1 and extending along the whole length of the seal 1 (in other words, the length of the second chamber C2 coincides with the length of the seal 1);
   - wherein the first chamber C1 and the second chamber C2 are separated by a common wall 3;
   - wherein the first chamber C1 and the second chamber C2 have a common simmetry axis X perpendicular to the length of the seal 1;
- latching elements 4 (preferably consisting of fixing tabs symmetrically arranged in respect to the common symmetry axis X) provided on the outer surface of the first chamber C1, and configured to be latched in an associated groove provided in a frame of a sliding element;
- sealing elements 7 (preferably consisting of parallel strips of plastic material, extending along the whole length of the second chamber C2) provided on the outer surface of the seal 1 on the second chamber C2, opposed to the latching elements 4;
- two parallel folding grooves 8, arranged along the second chamber C2 and symmetrically in respect to the common symmetry axis X, said folding grooves 8 being capable to ensure the deformation of the second chamber C2 when applying an external pressure to the sealing elements 7.

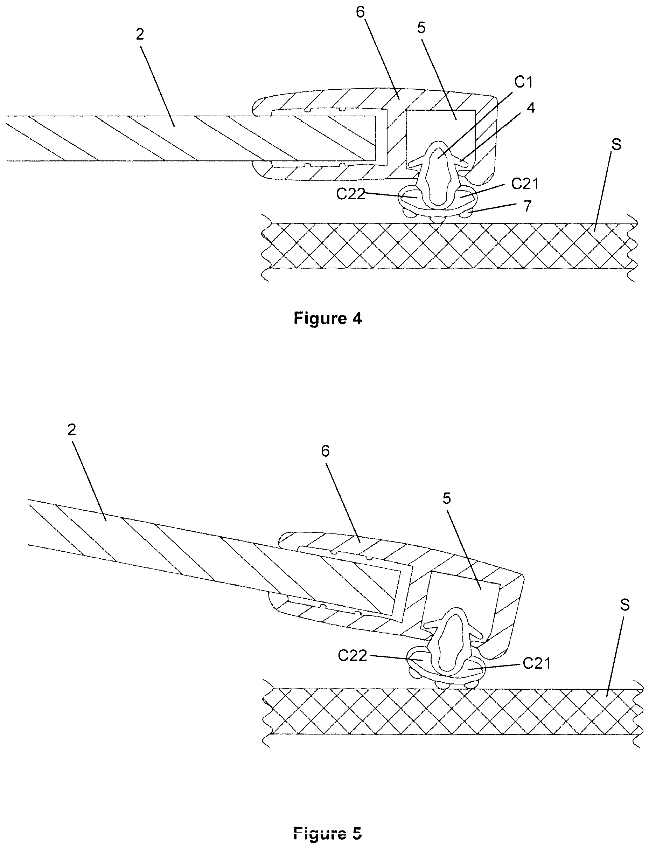

In contrast to the seal from Figure 1, the seal according to the invention from Figure 3 has the common wall 3 provided with a substantially U-shape when seen in cross-section in a plane perpendicular to the length of the seal 1, such that:
- the common wall 3 extends inside the second chamber C2;
- when seen in said cross-section, in the region of the common wall 3, the contour of the first chamber C1 has a convex shape and the contour of the second chamber C2 has a concave shape;
- when at least one of the sealing elements 7 is in contact with and pressed to a sliding rail S (shown only in Figures 4 and 5), the second chamber C2 is capable to adopt a deformed position in which the common wall 3 is in contact, over its entire length, with the inner surface of the second chamber C2, thus dividing the second chamber C2 into two separate rooms C21, C22 (shown only in Figures 4 and 5), isolated from one another.

Figure 4 shows a seal according to the invention, mounted in a sliding element 2 and in contact with a sliding rail S arranged in a plane parallel to the plane of the sliding element 2. The latching elements 4 are latched in an associated groove 5 provided in a frame 6 of the sliding element 2.
The sliding element 2 may be, for example, the cover of a refrigerating container.
At least one of the sealing elements 7 is in contact with and pressed to the sliding rail S, the pressing force applied to said at least one sealing element 7 thus ensuring the deformation of the second chamber C2 such that the common wall 3 is in contact, over its entire length, with the inner surface of the second chamber C2, thus dividing the second chamber C2 into two separate rooms C21, C22, isolated from one another.

The U-shape of the common wall 3 eliminates the possibility of a disadvantageous deformation (similar to the one shown in Figure 2) of the chamber C2.

The exterior of the room C21 is in contact with the air outside the refrigerating device and the exterior of the room C22 is in contact with the air inside the refrigerating device.

The transformation of the second chamber C2 into two separate isolated rooms C21, C22, has as direct consequence a better thermal insulation of the inside of the refrigerating device.

Figure 5 is similar to Figure 4, the difference between the two figures being that the sliding rail S from Figure 5 is arranged in a plane non-parallel to the plane of the sliding element 2.

The behaviour of the seal 1 from Figure 5 is identical to the one described in case of Figure 4.

Both first chamber C1 and second chamber C2 preferably have the wall thickness of about 1.5 mm, except for the regions of the folding grooves 8 where the wall thickness is about 0.5 mm.

The first chamber C1 is preferably made of T.R.T. rubber having Shore hardness 90. The second chamber C2 is preferably made of T.R.T. rubber having Shore hardness 60. The parallel strips 7 are preferably made of H.D.P.E.

Although only one embodiment was disclosed in the description, the present invention is not limited exclusively to said embodiment and covers all equivalents of the disclosed means and of the combinations thereof, as long as said means perform the same function.

## Claims

1. Seal (1) for a sliding element (2), comprising:
- a first chamber (C1), arranged inside the seal (1) and extending along the whole length of the seal (1);
- a second chamber (C2), arranged inside the seal (1) and extending along the whole length of the seal (1);
- the first chamber (C1) and the second chamber (C2) being separated by a common wall (3);
- the first chamber (C1) and the second chamber (C2) having a common simmetry axis (X) perpendicular to the length of the seal (1);
- latching elements (4) provided on the outer surface of the first chamber (C1), and configured to be latched in an associated groove (5) provided in a frame (6) of the sliding element (2);
- sealing elements (7) provided on the outer surface of the seal (1) on the second chamber (C2), opposed to the latching elements (4);
- two parallel folding grooves (8), arranged along the second chamber (C2) and symmetrically in respect to the common symmetry axis (X), said folding grooves (8) being capable to ensure the deformation of the second chamber (C2) when applying an external pressure to the sealing elements (7);
**characterized in that**
the common wall (3) has a substantially U-shape when seen in cross-section in a plane perpendicular to the length of the seal (1), such that:
- the common wall (3) extends inside the second chamber (C2);
- when seen in said cross-section, in the region of the common wall (3) the contour of the first chamber (C1) has a convex shape and the contour of the second chamber (C2) has a concave shape;
- when at least one of the sealing elements (7) is in contact with and pressed to a sliding rail (S), the second chamber (C2) is capable to adopt a deformed position in which the common wall (3) is in contact, over its entire length, with the inner surface of the second chamber (C2), thus dividing the second chamber (C2) into two separate rooms (C21, C22), isolated from one another.

2. Seal (1) according to claim 1, **characterized in that** the latching elements (4) are fixing protuberances (4) symmetrically arranged in respect to the common symmetry axis (X).

3. Seal (1) according to claims 1-2, **characterized in that** the sealing elements (7) are parallel strips (7) of plastic material, extending along the whole length of the second chamber (C2).

4. Seal (1) according to claims 1-3, **characterized in that** the first chamber (C1) and the second chamber (C2) have a wall thickness of about 1.5 mm, except for the regions of the folding grooves (8) where the wall thickness is about 0.5 mm.

5. Seal (1) according to claims 3-4, **characterized in that** the first chamber (C1) is made of T.R.T. rubber having Shore hardness 90, the second chamber (C2) is made of T.R.T. rubber having Shore hardness 60, and the parallel strips (7) are made of H.D.P.E.

6. Sliding cover or sliding shelf of a refrigerating device, provided with a seal according to one or more of the previous claims 1 to 5.
